(19) Europäisches Patentamt
European Patent Office
Office européen des brevets

(11) Veröffentlichungsnummer: **0 081 112**
**B1**

(12) # EUROPÄISCHE PATENTSCHRIFT

(45) Veröffentlichungstag der Patentschrift: **24.09.86**

(51) Int. Cl.[4]: **D 21 H 3/40,** C 08 F 210/14 // (C08F210/14, 222:06, 216:12)

(21) Anmeldenummer: **82110636.6**

(22) Anmeldetag: **18.11.82**

(54) **Verfahren zur Leimung von Papier.**

(30) Priorität: **01.12.81 DE 3147477**

(43) Veröffentlichungstag der Anmeldung:
**15.06.83 Patentblatt 83/24**

(45) Bekanntmachung des Hinweises auf die Patenterteilung:
**24.09.86 Patentblatt 86/39**

(84) Benannte Vertragsstaaten:
**AT DE FR GB IT**

(56) Entgegenhaltungen:
**EP-A-0 054 231**
**CH-A-459 741**
**US-A-3 560 456**

(73) Patentinhaber: **BAYER AG, Konzernverwaltung RP Patentabteilung, D-5090 Leverkusen 1 Bayerwerk (DE)**

(72) Erfinder: **von Bonin, Wulf, Dr., Mendelsohnstrasse 30, D-5090 Leverkusen (DE)**
Erfinder: **Mummenhoff, Peter, Dr., Silesiusstrasse 76, D-5090 Köln 80 (DE)**
Erfinder: **Beck, Ulrich, Dr., Weiherstrasse 17, D-5303 Bornheim 3 (DE)**
Erfinder: **Bäumgen, Heinz, Buchenweg 10, D-5090 Leverkusen 1 (DE)**

EP 0 081 112 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Bei der Papierleimung unterscheidet man nicht-reaktive Leimungsmittel, das sind solche, die unter Leimungsbedingungen im wesentlichen nicht mit dem Papierstoff reagieren und Reaktivleimungsmittel, das sind solche, die über Wirkgruppen verfügen, die mit dem Papierstoff unter Ausbildung kovalenter Bindungen reagieren können. Wirkgruppen sind z.B. Diketen- und Anhydridgruppen.

Aus der CH-A-459 741 sind Copolymerisate aus Maleinsäureanhydrid und $C_8$-$C_{24}$-α-Olefinen im molaren Verhältnis von 1:1 bis 1:0,53 bekannt, die als wäßrige basische Lösungen, d.h. als Lösungen der Salze oder Amidsalze zur Papierleimung eingesetzt werden. Anhydridgruppen enthaltende Leimungsmittel werden durch Umsetzung von Gemischen ungesättigter Kohlenwasserstoffe (vgl. z.B. EP-A- 29530) mit Maleinsäureanhydrid hergestellt. Auf Grund der wenig definierten Zusammensetzung solcher Produkte handelt es sich um Produkte mit öligviskosem Charakter, die oftmals stark und unangenehm riechen, bzw. erhebliche Eigenfärbung aufweisen, sodaß ihre Anwendung im Papiersektor problematisch ist.

Aufgabe der vorliegenden Erfindung war die Bereitstellung eines Leimungsverfahrens für Papier, das diese Nachteile nicht mehr aufweist. Überraschenderweise wurde gefunden, daß diese Aufgabe gelöst wird, wenn man als Papierleimungsmittel Copolymerisate aus Maleinsäureanhydrid und $C_{15}$-$C_{25}$-1-Olefinen im molaren Verhältnis 1:1,5 bis 3,5 verwendet. Die vorliegende Erfindung betrifft daher ein Verfahren zur Leimung von Papier, dadurch gekennzeichnet, daß man als Leimungsmittel Copolymerisate aus Maleinsäureanhydrid und $C_{15}$-$C_{25}$-1-Olefinen im molaren Verhätnis 1:1,5 bis 3,5 verwendet, wobei bis zu 30 Gew.-% der Gesamtmonomermenge aus weiteren copolymerisierbaren Monomeren bestehen können. Vorzugsweise findet als 1-Olefin Octadecen Verwendung.

Bevorzugt werden Copolymerisate verwendet, die Maleinsäureanhydrid und 1-Olefin im molaren Verhältnis von 1:1,8 bis 2,8 enthalten.

Die Copolymerisate sind nahezu farblos, haben nur einen schwachen Eigengeruch und beginnen ab etwa 40°C zu schmelzen, so daß sie auf dem Papier unter Normalbedingungen keinen Schmierfilm bilden.

Die Herstellung der Copolymerisate erfolgt durch thermische, vorzugsweise jedoch mit üblichen Radikalbildnern initierte Polymerisation bei Temperaturen zwischen 60 und 250°C, bevorzugt 100 bis 180°C, z.B. indem man das Monomerengemisch in einem Rührgefäß gegebenenfalls unter Inertgasatmosphäre intensiv rührt. Vorzugsweise werden Radikalbildner im Gemisch verwendet, wobei solche mit Zersetzungsbeginn unter und über 100°C kombiniert werden. Solche Kombinationen sind z.B. t-Butylperoctoat im Gemisch mit t-Butylhydroperoxyd, Di-tert. Butylperoxyd, Cumolhydroperoxyd oder Dicumylperoxyd. Die Aktivatorkombination sollte mindestens 10 Gew.-% der unter 100°C zerfallenden Komponente enthalten. Bezogen auf Gesamtmonomere werden die Radikalbildner in Mengen von 0,01 bis 3, vorzugsweise 0,2 bis 1 Gew.-% eingesetzt.

Prinzipiell sind auch solche Copolymerisate in Betracht zu ziehen, die auf andere Weise, z.B. durch simultanes oder chargenweises Vor- oder Nachdosieren der einzelnen Monomeren während der Polymerisation herstellbar sind. Weiterer copolymerisierbare Monomere sind z.B. Vinylaromaten, Vinylester, niedere 1-Olefine mit 2-8 C-Atomen oder α, β-ungesättigte Carbonsäuren und deren Derivate.

Als besonders vorteilhaft hat es sich erwiesen, bei der Herstellung der Polymerisate als Polymerisationsmodifikatoren Enolether des Tetrahydrobenzaldehyds in Mengen von 0,1 bis 3, vorzugsweise 0,5 bis 1,5 Gew.-% bezogen auf Gesamtmonomere mitzuverwenden. Der bevorzugte Enolether hat folgende Konstitution:

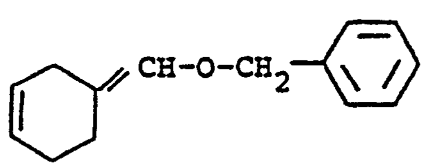

Die Herstellung solcher Copolymerisate wird vorzugsweise ohne Mitverwendung von Lösungsmitteln vorgenommen, obgleich der Einsatz von aliphatischen und/oder aromatischen Lösungsmitteln, gegebenenfalls

auch ein Arbeiten unter erhöhten Drücken möglich ist.

Bei dem erfindungsgemäßen Leimungsverfahren kann es sich sowohl um eine Oberflächen- oder Masseleimung handeln. Dazu können die Polymerisate in Form von Lösungen, z.B. in organischen Lösungsmitteln, oder in Form von wäßrigen Zubereitungen, etwa in Form von Suspension, Verwendung finden. Als Suspendierhilfsmittel sind z.B. Polyvinylalkohol oder wasserlösliche Cellulosederivate, insbesondere kationische Stärken, gut geeignet, gegebenenfalls in Kombination mit vorzugsweise nichtionischen Emulgatoren.

Kombinationen mit weiteren, insbesonders kationischen Papierhilfsmitteln, z.B. Retentions- oder Naßfestmitteln sind oft vorteilhaft, ebenso die Kombination mit üblichen Leimungsmitteln.

Die zu leimenden Papiere können nicht nur Feinpapiere auf Basis von Anthrachinon-, Sulfit-, Sulfat-, Nadelholz-Typen in Betracht zu ziehen, die Regenerat-Papierstoff, Holzschliff oder synthetische Pulpen enthalten. Es kann sich auch um Pappen oder Faserstoffplatten handeln.

**Beispiele**

Herstellung eines leimungswirksamen Copolymerisates:

500 g Octadecen (ca. 2 Mol) werden mit 100 g Maleinanhydrid (ca. 1 Mol); 6 g des Enolaethers aus Tetrahydrobenzaldehyd und Benzylalkohol sowie 1,5 g t-Butylperoctoat und 1,5 g t-Butylhydroperoxyd 6 h bei 165°C in einem geschlossenen Rührgefäß gerührt. Das abgekühlte Polymerisat stellt eine wachsartige nahezu farblose Substanz mit minimalem Eigengeruch dar, die ab 45°C zu schmelzen beginnt

Zur möglichst störungsfreien Ermittelung der Leimungseigenschaften des reinen Leimungswirkstoffs, d.h. zur Ausschaltung von formulierungsbedingten Einflüssen, wird folgender Test durchgeführt. Zu Vergleichszwecken wird Stearoyldiketen als Leimungsmittel mitgeprüft:

Es wurden drei verschiedene Papiertypen eingesetzt:

Papier 1: Kreidegefüllt, neutral

Papier 2: Kaolingefüllt, neutral

Papier 3: Kaolingefüllt, alaunhaltig, sauer

Die Papiere wurden auf einem Foulardgerät mit den Leimungsmitteln, 0,1 bzw. 0,2 gew.-%ig gelöst in Toluol, ausgerüstet und abgequetscht. Dann erfolgte eine Nachbehandlung:

Nachbehandlung a: Auf einer Trockenwalze 5 Min. 150°-Trocknung

" b: Nach Lufttrocknung 20°C auf Trockenwalze 1 Min. bei 90°C trocknen.

" c: Nach Lufttrocknung bei 20°C in Leitungswasser eintauchen und dann nach Abquetschen 4 Min. auf der Trockenwalze bei 90°C trocknen.

" d: Nur Lufttrocknung bei 20°C.

Nachbehandlung (d) gibt Anhaltspunkte für die Leimungswirkung des zu untersuchenden Stoffes ohne wesentliche Reaktion der Reaktivgruppen: während Nachbehandlung (a) die Leimungswirkung des ausreagierten Leimungsmittels verdeutlicht. Nachbehandlung (b) gibt Auskunft über das Anspringen der Reaktion des reinen Wirkstoffes bei praxisüblichen Leimungstemperaturen unter 120°C und Nachbehandlung (c) erfasst den Einfluß anwesender Feuchtigkeit während des Trockenprozesses unter Praxisbedingungen am reinen Wirkstoff.

Nach der Nachbehandlung werden aus den Papieren Streifen von 3 cm Breite und 9 cm Länge geschnitten und auf blaue Prüftinte ("Tintenschwimmprobe") aufgelegt. Nach einer Minute Auflage werden die Probepapiere von der Tinte genommen, rückseitig auf Löschpapier abgequetscht und nach 5 Min. beurteilt.

Wenn keine Tinte auf die Vorderseite des Prüflings durchgedrungen ist wird die Benotung 1 gewählt, wenn die gesamte Vorderseite blau durchfärbt ist, die Benotung 5. Wenn etwa die Hälfte der Vorderseite des Prüflings mit Durchschlagsflecken der Prüftinte bedeckt ist, wird mit 3 benotet, dazwischenliegende Tintendurchdringungen mit 2 bzw. 4.

Es wurden jeweils 5 Prüflinge einer Ausrüstungs- und Nachbehandlungsform beurteilt und der Durchschnitt der Benotungen festgestellt.

**Tabelle**

| | Benotung | |
|---|---|---|
| | Stearoyldiketen | Leimungsmittel gemäß Bsp. 1 |
| Papiertyp 1; 0,1 Gew.-% Wirkstoff | | |
| Nachbehandlung a | 1,0 | 1,0 |
| b | 4,5 | 1,5 |
| c | 1,5 | 5,0 |
| d | 5,0 | 4,0 |
| Papiertyp 2; 0,2 Gew.-% Wirkstoff | | |
| Nachbehandlung a | 3,0 | 4,0 |
| b | 5,0 | 5,0 |
| c | 4,5 | 5,0 |
| d | 5,0 | 5,0 |
| Papiertyp 3; 0,2 Gew.-% Wirkstoff | | |
| Nachbehandlung a | 1,5 | 1,0 |
| b | 5,0 | 1,5 |
| c | 5,0 | 4,5 |
| d | 5,0 | 5,0 |
| Notendurchschnitt | 3,8 | 3,5 |
| | (46) | (42,5) |

Man erkennt nicht nur am Notendurchschnitt die günstigeren Leimungseigenschaften des erfindungsgemäßen Leimungsmittels, sondern auch daran, daß es im Falle der in der Praxis vielfach verwendeten alaunhaltigen Papiere dem Diketentyp in Reaktionsfähigkeit und Wirksamkeit in ausreagierter Form überlegen ist, d.h. größere Vielseitigkeit besitzt.

**Patentansprüche**

1. Verfahren zur Leimung von Papier mit Leimungsmitteln, die Copolymerisate aus Maleinsäureanhydrid und $C_{15}$-$C_{25}$-1-Olefinen im molaren Verhältnis 1:1,5 bis 3,5 enthalten.

2. Verfahren gemäß Anspruch 1, dadurch gekennzeichnet, daß die Copolymerisate bis zu 30 Gew.-% der Gesamtmonomerenmenge aus weiteren copolymerisierbaren Monomeren bestehen.

3. Verfahren gemäß den Ansprüchen 1 und 2, dadurch gekennzeichnet, daß man als 1-Olefin 1-Octadecen verwendet.

4. Verfahren gemäß den Ansprüchen 1-3, dadurch gekennzeichnet, daß man solche Copolymerisate verwendet, die in Gegenwart von Enolethern des Tetrahydrobenzaldehyds hergestellt worden sind.

5. Verfahren gemäß den Ansprüchen 1-4, dadurch gekennzeichnet, daß man Maleinsäureanhydrid und $C_{15}$-$C_{25}$-1-Olefin im molaren Verhältnis von 1:1,8 bis 2,8 copolymerisiert.

**Claims**

1. Process for sizing paper with sizing agents which contain copolymers of maleic acid anhydride and $C_{15}$-$C_{25}$-1-olefins in a molar ratio of 1:1.5 to 3.5.

2. Process according to Claim 1, characterised in that the copolymers consist, to an extent of up to 30% by weight of the total quantity of monomers, of other copolymerisable monomers.

3. Process according to Claims 1 and 2, characterised in that 1-octadecene is used as the 1-olefin.

4. Process according to Claims 1-3, characterised in that copolymers are used which have been produced in the presence of enolethers of tetrahydrobenzaldehyde.

5. Process according to Claims 1-4, characterised in that maleic acid anhydride and $C_{15}$-$C_{25}$-1-olefin are copolymerised in a molar ratio of 1:1.8 to 2.8.

**Revendications**

1. Procédé de collage de papier avec des compositions de collage qui contiennent des produits de copolymérisation de l'anhydride d'acide maléique et de 1-oléfines en $C_{15}$ en $C_{25}$ dans un rapport molaire de 1:1,5 à 3,5.

2. Procédé suivant la revendication 1, caractérisé en ce que les produits de copolymérisation sont formés d'autres monomères copolymérisables en proportion allant jusqu'à 30% en poids de la quantité totale de monomères.

3. Procédé suivant les revendications 1 et 2, caractérisé en ce qu'on utilise le 1-octadécène comme 1-oléfine.

4. Procédé suivant les revendications 1-3, caractérisé en ce qu'on utilise des produits de copolymérisation qui ont été préparés en présence d'énoléthers du tétrahydrobenzaldéhyde.

5. Procédé suivant les revendications 1-4, caractérisé en ce qu'on copolymérise de l'anhydride d'acide maléique et une 1-oléfine en $C_{15}$ à $C_{25}$ dans un rapport molaire de 1:1,8 à 2,8.